# EUROPEAN PATENT APPLICATION

(11) **EP 2 259 651 A1**
(43) Date of publication of application: **08.12.2010**
(21) Application number: 09007490.7
(22) Date of filing: 05.06.2009
(51) Int. Cl.: H04W 76/04

(54) **QoS Multiplexing via base station-relay node interface**

(71) Applicant: Panasonic Corporation, Kadoma-shi Osaka 571-8501 (JP)
(72) Inventor: Gonsa, Osvaldo, 63225 Langen (DE); Löhr, Joachim, 63225 Langen (DE); Wengerter, Christian, 63225 Langen (DE)
(74) Representative: Grünecker, Kinkeldey, Stockmair & Schwanhäusser Anwaltssozietät

(57) **Abstract**

The invention relates to methods for providing IP packets from a core network node to a relay node, wherein the IP packets are conveyed via a base station to the relay node on a wireless interface. To suggest an interface termination for data transport between core network and a relay node that is allowing for a flexible QoS control, preferably on a per user equipment basis this invention proposes two different multiplexing modes for use on the interface between base station and relay node: a first mode in which there is only a single dedicated radio bearer between the base station and the relay node to which all IP packets are multiplexed/mapped, and a second multiplexing mode where multiple dedicated radio bearers between the base station and the relay node are configured and the base station is multiplexing IP packets to the individual dedicated radio bearers according to their QoS class.

## Description

### FIELD OF THE INVENTION

The invention relates to methods for providing IP packets from a core network node to a relay node, wherein the IP packets are conveyed via a base station to the relay node on a wireless interface. Furthermore, the invention is also related to the implementation/performance of these methods in/by hardware, i.e. apparatuses, and their implementation in software. The invention is especially applicable to the S1 interface of a 3GPP LTE-A system.

### TECHNICAL BACKGROUND

### Long Term Evolution (LTE)

Third-generation mobile systems (3G) based on WCDMA radio-access technology are being deployed on a broad scale all around the world. A first step in enhancing or evolving this technology entails introducing High-Speed Downlink Packet Access (HSDPA) and an enhanced uplink, also referred to as High Speed Uplink Packet Access (HSUPA), giving a radio-access technology that is highly competitive.

In order to be prepared for further increasing user demands and to be competitive against new radio access technologies 3GPP introduced a new mobile communication system which is called Long Term Evolution (LTE). LTE is designed to meet the carrier needs for high speed data and media transport as well as high capacity voice support to the next decade. The ability to provide high bit rates is a key measure for LTE.

The work item (WI) specification on Long-Term Evolution (LTE) called Evolved UMTS Terrestrial Radio Access (UTRA) and UMTS Terrestrial Radio Access Network (UTRAN) is to be finalized as Release 8 (LTE Rel. 8). The LTE system represents efficient packet-based radio access and radio access networks that provide full IP-based functionalities with low latency and low cost. The detailed system requirements are given in. In LTE, scalable multiple transmission bandwidths are specified such as 1.4, 3.0, 5.0, 10.0, 15.0, and 20.0 MHz, in order to achieve flexible system deployment using a given spectrum. In the downlink, Orthogonal Frequency Division Multiplexing (OFDM) based radio access was adopted because of its inherent immunity to multipath interference (MPI) due to a low symbol rate, the use of a cyclic prefix (CP), and its affinity to different transmission bandwidth arrangements. Single-carrier frequency division multiple access (SC-FDMA) based radio access was adopted in the uplink, since provisioning of wide area coverage was prioritized over improvement in the peak data rate considering the restricted transmission power of the user equipment (UE). Many key packet radio access techniques are employed including multiple-input multiple-output (MIMO) channel transmission techniques, and a highly efficient control signaling structure is achieved in LTE Rel. 8.

### LTE architecture

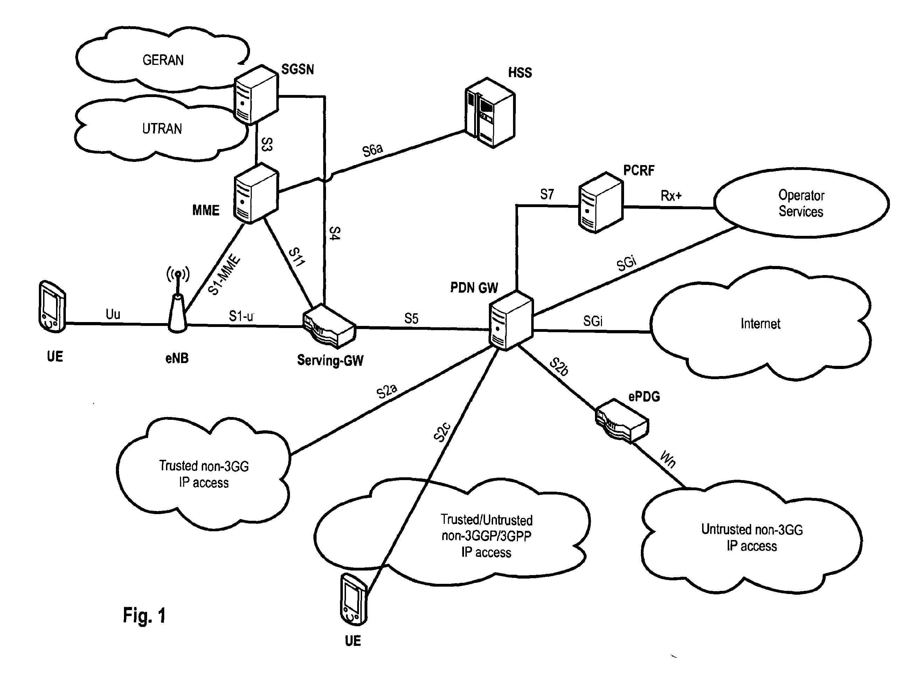

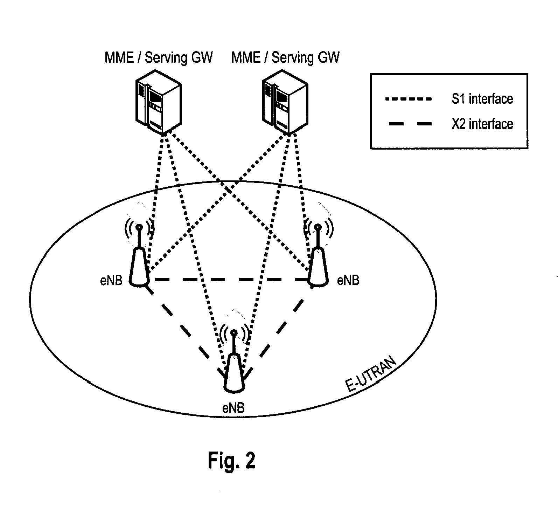

The overall architecture is shown in Fig. 1 and a more detailed representation of the E-UTRAN architecture is given in Fig. 2. The E-UTRAN consists of eNode B, providing the E-UTRA user plane (PDCP/RLC/MAC/PHY) and control plane (RRC) protocol terminations towards the user equipment (UE). The eNode B (eNB) hosts the Physical (PHY), Medium Access Control (MAC), Radio Link Control (RLC), and Packet Data Control Protocol (PDCP) layers that include the functionality of user-plane header-compression and encryption. It also offers Radio Resource Control (RRC) functionality corresponding to the control plane. It performs many functions including radio resource management, admission control, scheduling, enforcement of negotiated uplink QoS, cell information broadcast, ciphering/deciphering of user and control plane data, and compression/decompression of downlink/uplink user plane packet headers. The eNode Bs are interconnected with each other by means of the X2 interface.

The eNode Bs are also connected by means of the S1 interface to the EPC (Evolved Packet Core), more specifically to the MME (Mobility Management Entity) by means of the S1-MME and to the Serving Gateway (SGW) by means of the S1-U. The S1 interface supports a many-to-many relation between MMEs/Serving Gateways and eNode Bs. The SGW routes and forwards user data packets, while also acting as the mobility anchor for the user plane during inter-eNode B handovers and as the anchor for mobility between LTE and other 3GPP technologies (terminating S4 interface and relaying the traffic between 2G/3G systems and PDN GW). For idle state user equipments, the SGW terminates the downlink data path and triggers paging when downlink data arrives for the user equipment. It manages and stores user equipment contexts, e.g. parameters of the IP bearer service, network internal routing information. It also performs replication of the user traffic in case of lawful interception.

The MME is the key control-node for the LTE access-network. It is responsible for idle mode user equipment tracking and paging procedure including retransmissions. It is involved in the bearer activation/deactivation process and is also responsible for choosing the SGW for a user equipment at the initial attach and at time of intra-LTE handover involving Core Network (CN) node relocation. It is responsible for authenticating the user (by interacting with the HSS). The Non-Access Stratum (NAS) signaling terminates at the MME and it is also responsible for generation and allocation of temporary identities to user equipments. It checks the authorization of the user equipment to camp on the service provider's Public Land Mobile Network (PLMN) and enforces user equipment roaming restrictions. The MME is the termination point in the network for ciphering/integrity protection for NAS signaling and handles the security key management. Lawful interception of signaling is also supported by the MME. The MME also provides the control plane function for mobility between LTE and 2G/3G access networks with the S3 interface terminating at the MME from the SGSN. The MME also terminates the S6a interface towards the home HSS for roaming user equipments.

### Further Advancements for LTE (LTE-A)

The frequency spectrum for IMT-Advanced was decided at the World Radiocommunication Conference 2007 (WRC-07) in November 2008. Although the overall frequency spectrum for IMT-Advanced was decided, the actual available frequency bandwidth is different according to each region or country. Following the decision on the available frequency spectrum outline, however, standardization of a radio interface started in the 3rd Generation Partnership Project (3GPP). At the 3GPP TSG RAN #39 meeting, the Study Item description on "Further Advancements for E-UTRA (LTE-Advanced)" was approved. The study item covers technology components to be considered for the evolution of E-UTRA, e.g. to fulfill the requirements on IMT-Advanced. Two major technology components which are currently under consideration for LTE-A are described in the following.

### LTE-A Support of wider bandwidth

Carrier aggregation, where two or more component carriers are aggregated, is considered for LTE-Advanced in order to support wider transmission bandwidths e.g. up to 100 MHz and for spectrum aggregation.

A terminal may simultaneously receive or transmit on one or multiple component carriers depending on its capabilities:
- An LTE-Advanced terminal with reception and/or transmission capabilities for carrier aggregation can simultaneously receive and/or transmit on multiple component carriers. There is one Transport Block (in absence of spatial multiplexing) and one HARQ entity per component carrier.
- An LTE Rel. 8 terminal can receive and transmit on a single component carrier only, provided that the structure of the component carrier follows the Rel. 8 specifications.

It shall be possible to configure all component carriers LTE Release 8 compatible, at least when the aggregated numbers of component carriers in the uplink and the downlink are same. Consideration of non-backward-compatible configurations of LTE-A component carriers is not precluded

### LTE-A Support of Relaying functionality

Relaying is considered for LTE-Advanced as a tool to improve e.g. the coverage of high data rates, group mobility, temporary network deployment, the cell-edge throughput and/or to provide coverage in new areas.

The relay node is wirelessly connected to radio-access network via a donor cell. The connection can be
- inband, in which case the network-to-relay link share the same band with direct network-to-user equipment links within the donor cell. Rel. 8 user equipments should be able to connect to the donor cell in this case.
- outband, in which case the network-to-relay link does not operate in the same band as direct network-to-user equipment links within the donor cell

With respect to the knowledge in the user equipment, relays can be classified into -
- transparent, in which case the user equipment is not aware of whether or not it communicates with the network via the relay.
- non-transparent, in which case the user equipment is aware of whether or not it is communicating with the network via the relay.

Depending on the relaying strategy, a relay may
- be part of the donor cell
- control cells of its own

In the case the relay is part of the donor cell, the relay does not have a cell identity of its own (but may still have a relay ID). At least part of the RRM is controlled by the eNodeB to which the donor cell belongs, while parts of the RRM may be located in the relay. In this case, a relay should preferably support also LTE Rel. 8 user equipments. Smart repeaters, decode-and-forward relays and different types of L2 relays are examples of this type of relaying.

In the case the relay is in control of cells of its own, the relay controls one or several cells and a unique physical-layer cell identity is provided in each of the cells controlled by the relay. The same RRM mechanisms are available and from a user equipment perspective there is no difference in accessing cells controlled by a relay and cells controlled by a "normal" eNodeB. The cells controlled by the relay should support also LTE Rel. 8 user equipments. Self-backhauling (L3 relay) uses this type of relaying.

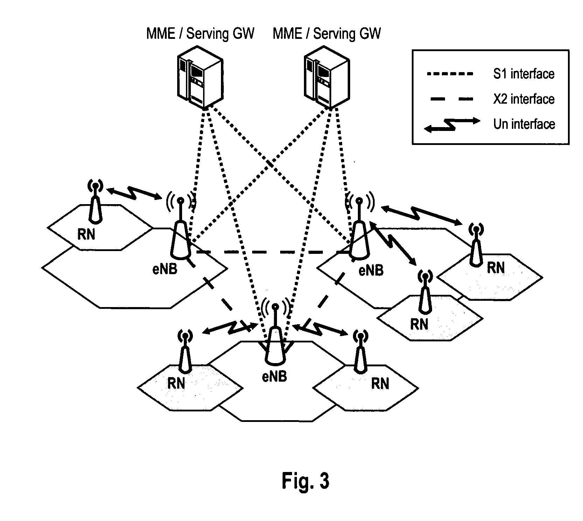

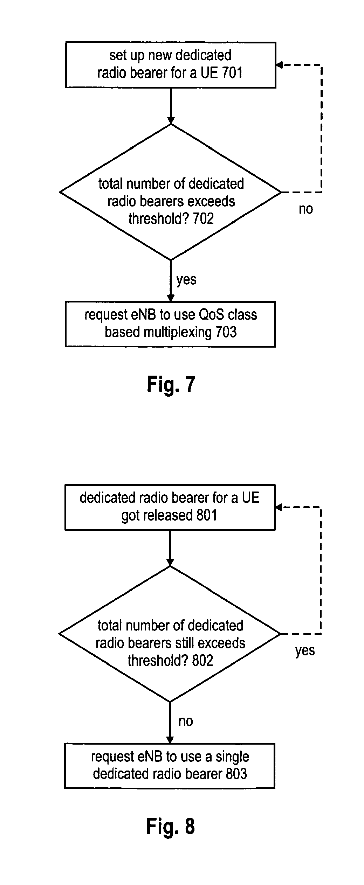

In Fig. 3 there is an exemplary LTE-A system shown which utilizes relay nodes (RN). The wireless interface between eNode B and RN, which connects a RN with the radio access network, is referred to as Un interface. The termination of the S1 interface for the control plane and user planet when using a RN architecture (i.e. the S1 interface between core network and RN) is currently discussed in the 3GPP. In 3GPP Tdoc. R2-093283, "On S1 termination and Protocol Stack in Relay Architecture", May 2009 (available at http://www.3gpp.org and incorporated herein by reference) presents possible control plane and user plane architecture alternatives for the RN architecture and its interaction with the core network entities (MME and Serving GW). 3GPP Tdoc. R2-093283 present six different architectures for the control plane that consider the termination of the S1 Application Part protocol (S1-AP), security and transport network level reliability (i.e. termination of the Stream Control Transmission Protocol (SCTP) protocol - see IETF RFC 2960, "Stream Control Transmission Protocol", October 2000 and IETF RFC 3286, "An Introduction to the Stream Control Transmission Protocol (SCTP", May 2002; both available at http://www.ietf.org and incorporated herein by reference). The architectures referred to as "Alternative 1" for control plane and user plane (see Fig. 1 and Fig. 7 of 3GPP Tdoc. R2-093283) consider the case where there is only a "big pipe", i.e. one single radio bearer, between eNode B and RN to transport the IP packets destined to UEs attached to the RN.

Other alternatives described in 3GPP Tdoc. R2-093283 indicate the possibility to utilize QoS multiplexing based on QoS to deliver the data to the RN. However, none of the alternatives described indicate how this multiplexing is realized. When making this invention, the inventors have investigated the architectures allegedly suitable for QoS multiplexing. In doing so it has been recognized that QoS multiplexing control per UE is not possible in the architectures proposed by 3GPP Tdoc. R2-093283

### SUMMARY OF THE INVENTION

One object of the invention is to suggest an interface termination for data transport between core network and a relay node that is allowing for a flexible QoS control, preferably on a per user equipment basis. Furthermore, it would be advantageous if such interface termination also allows for more efficient resource utilization on the interface between a base station (e.g. eNode B in a 3GPP-based network) and the relay node via which the data is transported.

One aspect of this invention is related to adaptive use of different multiplexing modes at the base station via which IP (Internet Protocol) packets from the core network are provided to the relay node for further distribution to user equipments attached to the relay node. According to this aspect of the invention, two different multiplexing modes can be used: a first mode in which there is only a single dedicated radio bearer between the base station and the relay node to which all IP packets are multiplexed/mapped, and a second multiplexing mode where multiple dedicated radio bearers between the base station and the relay node are configured and the base station is multiplexing IP packets to the individual dedicated radio bearers according to their QoS class.

According to one exemplary embodiment, a method for providing IP packets destined to user equipments connected to a relay node from a core network node to the relay node is suggested. The IP packets are conveyed via a base station to the relay node on a wireless interface. Exemplarily, the IP packets may be assumed to belong to a logical connection between the core network node and the relay node, which is therefore transparent to the base station. In this method it is switched between
- multiplexing the IP packets to one dedicated radio bearer (single radio bearer multiplexing mode) and
- multiplexing the IP packets to multiple dedicated radio bearers (multiple radio bearer multiplexing mode)
for provision to the relay node. In the multiple radio bearer multiplexing mode, i.e. when multiplexing the IP packets to the multiple dedicated radio bearers, the IP packets are multiplexed according to their QoS class that is controlling their respective radio bearer level packet forwarding treatment.

It should be further noted that the switching of the multiplexing mode may be performed in response to a trigger of the base station, the relay node or the core network node (e.g. the MME in a 3GPP network).

In another embodiment of the invention the base station receives a trigger requesting the base station to switch from multiplexing the IP packets to the one dedicated radio bearer to multiplexing the IP packets to multiple dedicated radio bearers according to their QoS class, or vice versa. This trigger may be for example received from the relay node or internally from another logical entity in the base station responsible for triggering the switching of the multiplexing mode. According to the trigger received from the relay node, the base station will use the appropriate multiplexing mode for the IP packets received from the core network node to the one dedicated radio bearer or to the multiple dedicated radio bearers according to their QoS class.

In a further embodiment of the invention, the base station may need to set up additional dedicated radio bearers between the base station and the relay node in response to a trigger requesting the base station to multiplex the IP packets to multiple dedicated radio bearers according to their QoS class. When implementing the invention in a 3GPP based system, e.g. an LTE or LTE-A system, it may be assumed that each of the dedicated radio bearers has its own RLC entity and MAC entity. The radio bearers may be set up for each QoS class or for plural QoS classes simultaneously (e.g. if IP packets of more than one QoS class should be mapped to the same dedicated radio bearer).

In another exemplary embodiment, the base station performs the following steps when multiplexing the IP packets to multiple dedicated radio bearers according to their QoS class. The base station receives IP packets from the core network node, and determines for a respective IP packet its QoS class from the respective IP packet. Based on the determined QoS class for the IP packets, the base station may then multiplex the respective IP packets to the (appropriate) multiple dedicated radio bearers, and transmits the IP packets via one of the respective dedicated radio bearers to the relay node.

In another embodiment of the invention, the base station schedules transmissions of multiplexed IP packets on the individual dedicated radio bearers to the relay node, which may for example comprise allocating physical channel resources to the relay node per dedicated radio bearer.

As indicated above, also the base station may trigger the switching of the multiplexing mode. According to another embodiment of the invention, the base station monitors the IP packets to obtain identifiers of the user equipments to which the IP packets are to be provided by the relay node and the QoS class of the respective IP packets. Based on these obtained parameters, the base station can decide whether to switch from multiplexing the IP packets to one dedicated radio bearer to multiplexing the IP packets to multiple dedicated radio bearers, or vice versa and may undertake the appropriate action to do so.

For example, in another embodiment, the base station is requesting, in response to switching to multiplexing the IP packets to the multiple dedicated radio bearers, channel quality information from the relay node for at least one of the user equipments to which the IP packets are to be provided by the relay node.

In a further embodiment of the invention, the base station may further receive from the relay node channel quality information. As indicated above, this information may be provided on request of the base station or also autonomously by the relay node. The channel quality information comprises (for each user equipment reported on) the respective user equipment's identifier and a channel quality on the radio channel between the relay node and the respective user equipment. Optionally, in addition to the channel quality information the relay node may further indicate to the base station the tunnel endpoint identifier(s) of the radio access bearers of the (logical) interface between the relay node and the base station that belong to a user equipment's identifier.

This information on the wireless interface between the relay node and the user equipments may be of interest for the base station for consideration in the scheduling of its resources on the wireless interface to the relay node and in multiplexing the IP packets to the respective dedicated radio bearers for the purpose of optimizing resource utilization.

Accordingly, the base station may for example determine from the IP packets identifiers of the user equipment to which the IP packets are to be provided by the relay node, and could use this information and the radio channel quality of the respective user equipments on the radio channel between the relay node and the respective user equipment when performing multiplexing of the IP packets to the multiple dedicated radio bearers according to their QoS class.

Another exemplary embodiment of the invention is related to the operation of the relay node. A further embodiment is therefore related to a method for providing IP packets from a core network node to a relay node, wherein the IP packets are conveyed via a base station to the relay node on a wireless interface. In this method, the relay node is transmitting a trigger to the base station for requesting the base station to switch between multiplexing the IP packets to a single dedicated radio bearer and multiplexing the IP packets to multiple dedicated radio bearers according to their QoS class that is controlling their respective radio bearer level packet forwarding treatment. In response to the trigger, the relay node receives from the base station IP packets destined to user equipments connected to the relay node via the single dedicated radio bearer, or via the multiple dedicated radio bearers.

In a more detailed exemplary embodiment, the relay node receives IP packets destined to user equipments connected to the relay node via the single dedicated radio bearer and further decides to trigger the provision of the IP packets via the multiple radio bearers by transmitting said message based on at least one of:
- physical channel resources allocated to the relay node by the base station for the provision of the IP packets on the single radio bearer, and
- the number of dedicated radio bearers established by the relay node to attached user equipments optionally further taking into account the QoS classes of the dedicated radio bearers.,

In another embodiment of the invention, the relay node is further determining the radio channel quality on a radio channel between the relay node and a respective user equipment, and is signalling for a respective user equipment connected to the relay node the determined radio channel quality and an identifier of the user equipment to the base station.

Another aspect of the invention is the implementation of the methods described herein in hardware and/or software. Accordingly, a further embodiment of the invention is related to a base station for providing IP packets destined to user equipments connected to a relay node. The base station has a multiplexer for multiplexing the IP packets and a control unit for controlling the multiplexer. The control unit is adapted to switch the multiplexer between the modes of
- multiplexing the IP packets to one dedicated radio bearer (single radio bearer multiplexing mode) and
- multiplexing the IP packets to multiple dedicated radio bearers (multiple radio bearer multiplexing mode)
for provision to the relay node. Furthermore, the multiplexer is capable of multiplexing IP packets according to their QoS class that is controlling their respective radio bearer level packet forwarding treatment, when the multiplexer is in the mode of multiplexing the IP packets to the multiple dedicated radio bearers.

The base station according to another embodiment of the invention comprises means adapted to perform the method for providing IP packets destined to user equipments connected to a relay node from a core network node to the relay node according to one of the various embodiments described herein.

Furthermore, an embodiment of the invention relates to a relay node receiving IP packets from a relay node, wherein the IP packets are conveyed from a core network node via a base station to the relay node on a wireless interface. The relay node comprises a transmitter for transmitting a trigger to the base station for requesting the base station to switch between multiplexing the IP packets to a single dedicated radio bearer and multiplexing the IP packets to multiple dedicated radio bearers according to their QoS class that is controlling their respective radio bearer level packet forwarding treatment, and a receiver for receiving in response to the trigger IP packets from the base station, wherein the IP packets are destined to user equipments connected to the relay node via the single dedicated radio bearer, or via the multiple dedicated radio bearers.

The relay node according to another embodiment of the invention comprises means adapted to perform the method for providing IP packets destined to user equipments connected to a relay node from a core network node to the relay node according to one of the various embodiments described herein.

A further embodiment of the invention is related to a computer readable medium storing instructions that, when executed by a processor of a base station, cause the base station to provide IP packets destined to user equipments connected to a relay node, by switching between
- multiplexing the IP packets to one dedicated radio bearer (single radio bearer multiplexing mode) and
- multiplexing the IP packets to multiple dedicated radio bearers (multiple radio bearer multiplexing mode)
for provision to the relay node, wherein when multiplexing the IP packets to the multiple dedicated radio bearers the IP packets are multiplexed according to their QoS class that is controlling their respective radio bearer level packet forwarding treatment.

The computer readable medium according to another embodiment of the invention, is further storing instructions that, when executed by the processor of the base station, cause the base station to execute the steps of the method for providing IP packets destined to user equipments connected to a relay node from a core network node to the relay node according to one of the various embodiments described herein.

Another computer readable medium according to an embodiment of the invention is storing instructions that, when executed by a processor if a relay node, cause the relay node to receive IP packets from a relay node, by transmitting a trigger to the base station for requesting the base station to switch between multiplexing the IP packets to a single dedicated radio bearer and multiplexing the IP packets to multiple dedicated radio bearers according to their QoS class that is controlling their respective radio bearer level packet forwarding treatment, and receiving in response to the trigger IP packets from the base station, wherein the IP packets are destined to user equipments connected to the relay node via the single dedicated radio bearer, or via the multiple dedicated radio bearers.

In a further embodiment, this computer readable medium is further storing instructions that, when executed by the processor of the relay node, cause the relay node to execute the steps of the method for providing IP packets destined to user equipments connected to a relay node from a core network node to the relay node according to one of the various embodiments described herein.

### BRIEF DESCRIPTION OF THE FIGURES

In the following the invention is described in more detail in reference to the attached figures and drawings. Similar or corresponding details in the figures are marked with the same reference numerals.
- **Fig. 1**: shows an exemplary architecture of a 3GPP LTE system,
- **Fig. 2**: shows an exemplary overview of the overall E-UTRAN architecture of LTE,
- **Fig. 3**: shows an exemplary overview of the overall E-UTRAN architecture of LTE-A including several relay nodes (RN),
- **Fig. 4**: shows a flow chart of triggering switching between different multiplexing modes at the base station according to an exemplary embodiment of the invention,
- **Fig. 5**: shows another flow chart for illustrating the QoS class-based multiplexing of IP packets at the base station according to an exemplary embodiment of the invention,
- **Fig. 6**: shows another flow chart illustrating the transmission of multiplexed IP packets on a dedicated radio bearer according to an exemplary embodiment of the invention,
- **Fig. 7 & 8**: show two exemplary flow charts for triggering a switching of the multiplexing mode by a relay node according to exemplary embodiments of the invention,
- **Fig. 9 & 10**: show an exemplary overview of the protocol stack in UE, RN, eNode B (eNB) and the core network (CN Node) for use in a 3GPP-based network according to an exemplary embodiment of the invention,
- **Fig. 11 & 12**: show an exemplary architecture of the protocol stack of the user plane in UE, RN, eNode B (eNB) and the core network (CN Node) for use in a 3GPP-based network according to an exemplary embodiment of the invention,
- **Fig. 13 & 14**: show an exemplary architecture of the protocol stack of the control plane in UE, RN, eNode B (eNB) and the core network (CN Node) for use in a 3GPP-based network according to an exemplary embodiment of the invention,
- **Fig. 15**: shows an exemplary signaling within a 3GPP based network according to an embodiment of the invention, when switching the multiplexing mode
- **Fig. 16 & 17**: from a single radio bearer multiplexing mode to a multiple bearers multiplexing mode, show exemplary the forwarding of IP packets between the core network and an eNode B (eNB), and the eNode B (eNB) and a relay node, prior and after switching the multiplexing mode in the eNode B (eNB),
- **Fig. 18**: shows the exemplary structure of IP packets forwarded from the core network via the base station (eNode B) to a relay node, according to the protocol stacks shown in Fig. 9 to 14,
- **Fig. 19 and 20**: show the mapping of multiplexed IP packets of a radio bearer to physical channel resources by the base station according to exemplary embodiments of the invention, and
- **Fig. 21**: shows the exemplary multiplexing of data (IP packets) of different user equipments to transport blocks with and without utilizing channel quality information (CQI information) of the user equipments according to an embodiment of the invention.

### DETAILED DESCRIPTION OF THE INVENTION

The following paragraphs will describe various embodiments of the invention. For exemplary purposes only, most of the embodiments are outlined in relation to an orthogonal single-carrier uplink radio access scheme according to the LTE-Advanced mobile communication system discussed in the Technical Background section above. It should be noted that the invention may be advantageously used for example in connection with a mobile communication system such as the LTE-Advanced communication system previously described, but the invention is not limited to its use in this particular exemplary communication network.

The explanations given in the Technical Background section above are intended to better understand the mostly LTE-Advanced specific exemplary embodiments described herein and should not be understood as limiting the invention to the described specific implementations of processes and functions in the mobile communication network. Nevertheless, the improvements proposed herein may be readily applied in the architectures/systems described in the Technical Background section and may in some embodiments of the invention also make use of standard and improved procedures of theses architectures/systems.

One aspect of this invention is related to adaptive use of different multiplexing modes at the base station via which IP packets from the core network are provided to the relay node for further distribution to mobile terminals (user equipments) attached to the relay node. According to this aspect of the invention, two different multiplexing modes can be used: a first mode in which there is only a single dedicated radio bearer between the base station and the relay node to which all IP packets are multiplexed/mapped, and a second multiplexing mode where multiple dedicated radio bearers between the base station and the relay node are configured and the base station is multiplexing IP packets to the individual dedicated radio bearers according to their QoS class.

Another aspect of the invention is the triggering of the switching between these two multiplexing modes. Generally, there exist different possibilities which network node is triggering switching the multiplexing mode. Advantageously the switching decision should be based on criteria that allow flexible QoS control on the wireless interface between the base station and the relay node and/or that allow for efficient resource utilization on this interface.

Assuming for exemplary purposes a scenario where QoS related information is only transparent to the base station (i.e. the base station is not acting upon the protocol layer comprising the QoS related information) and assuming a core network node and the relay node to terminate the protocol layer comprising the QoS related information (i.e. there is a (logical) interface/connection between core network and relay node), one possibility is to control the switching of the scheduling mode by the relay node which may be assumed to be aware of the QoS related information, like a QoS class, of the IP packets (i.e. service data) it further relays to its attached user equipments. However, another possibility is to implement something like a "semi-transparent" operation, where the base station is not terminating the protocol layer comprising the QoS-related information but is only obtaining relevant information therefrom, so that the base station may decide on the multiplexing mode used on the wireless interface to the relay node for the IP packets.

These aspects are both especially applicable (but not limited) to the operation of the S1 interface architecture in a 3GPP LTE-A system, in particular regarding the operation of the eNode B and the relay node (RN).

In one embodiment of the invention it may be assumed that the core network is providing service data (e.g. in form of IP packets) for transmission to user equipments that are attached to a relay node. These service data (e.g. datagrams) is transmitted from a core network node (such as for example a SGW or a MME in the 3GPP core network) via a base station (such as an eNode B in the 3GPP access network) to the relay node. It may be assumed that the service data is provided via a (logical) interface (such as for example the S1 interface in the 3GPP LTE-A architecture) terminated by the core network node and the relay node. The service data is provided from the core network node to the relay node using underlying transport network layer (TNL) mechanisms, the main aspect of which is routing the service data between the core network node and the relay node.

For this purpose, the service data transported provided on the (logical) interface by the respective interface protocol are encapsulated in IP packets that indicate the relay node as their destination IP address to ensure proper routing of the service data from the core network to the relay node via the TNL of the communication system. The relay node subsequently extracts the service data and can determine - based on the header information of the interface protocol of the (logical) interface between core network and the relay node - to which user equipment the respective service data is destined so as to map them on the appropriate radio channels (radio bearer) for transmission to the user equipments.

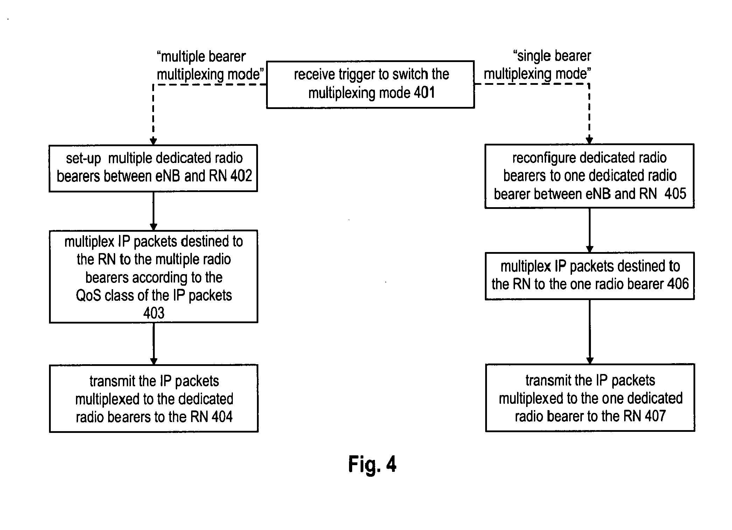

The base station could for example comprise some control unit that is controlling the multiplexing of the IP packets by a QoS multiplexer within the base station. Fig. 4 shows a flow chart of triggering switching between different multiplexing modes at the base station according to an exemplary embodiment of the invention. In this exemplary embodiment, it may be assumed that there is a trigger 401 to change the multiplexing mode. For example, if the trigger is indicating to use a multiple radio bearer multiplexing mode, the base station sets up 402 multiple radio bearers to the relay node.

This could be for example realized by the base station and the relay node performing a radio bearer setup/reconfiguration procedure in which the respective radio bearers and their individual RLC entities and MAC entities are configured.

Upon the multiple radio bearers having been established, the base station starts multiplexing 403 IP packets received from the core network and destined to the relay node (according to the destination address in the outer IP header) to the individual dedicated radio bearers according to their QoS class. In one example, the network node triggering the switching to the multiple radio bearer multiplexing mode could for example indicate the QoS class(es) IP packets of which should be multiplexed to the given dedicated radio bearers. Subsequently, the base station (eNB) transmits 404 the multiplexed IP packets via the respective radio bearers to the relay node (RN).

If the trigger is indicating single radio bearer multiplexing, the base station may first need to reconfigure 405 the established multiple radio bearers towards the relay node so that there remains only one single dedicated radio bearer. Subsequently, the base station 406 multiplexes all IP packets destined to the relay node (according to the destination address in the outer IP header) to this one dedicated radio bearer and transmits 407 the radio bearer to the relay node.

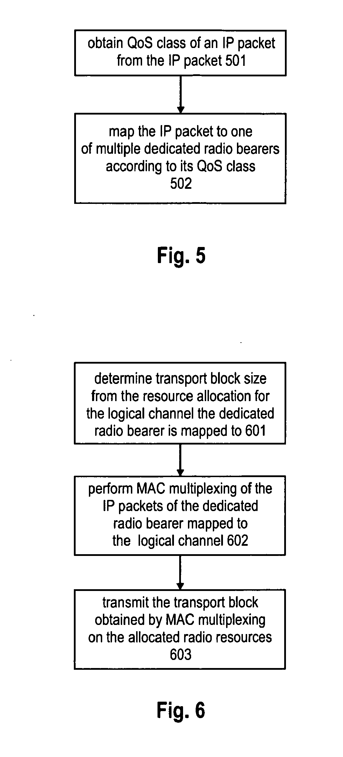

Fig. 5 shows another flow chart according to an exemplary embodiment of the invention for illustrating the QoS class-based multiplexing of IP packets at the base station (see step 403 in Fig. 4) in further detail. As described above the base station may be assumed to be involved in the service data delivery from core network to the relay node insofar as routing the service data encapsulated into IP packets is concerned.

In case QoS class-based multiplexing is activated, the base station may for example process the received IP packets as follows. For each IP packet that is to be forwarded to the relay node, the base station is "looking" 501 into the payload section of the IP packets. This payload section should contain protocol header ("inner" protocol header) of the (logical) interface connection used between the core network and the relay node to provide the service data from core network to the relay node.

The base station derives 501 from each IP packet the QoS class of the payload data and uses the information to map 502 the IP packet to the correct one of the dedicated radio bearers.

This "inner" protocol header may inter alia indicate the QoS class of the service data. The QoS class may be indicated explicitly in the "inner" protocol header or implicitly. The QoS classes could be identified by means of a QoS class indicator (QCI). Furthermore, the QoS class may be implicit to the type of protocol header(s) included in the "inner" protocol header.

For example, in 3GPP LTE-A an implicit indication of the QoS class is used. The "inner" header of the IP packet (i.e. the S1 header) contains the Tunnel Endpoint-Identifier (TE-ID) of the S1 radio access bearer between the S-GW and the relay node for the user plane. The S1 radio access bearers themselves are each associated to a QoS class (and user equipment). By identifying the S1 radio access bearer of which S1 payload data is contained in the IP packet based on the TE-ID in the "inner" protocol header of the IP packet, the eNode B can conclude on the QoS class of the (S1 payload) data in the IP packet. Alternatively, the S1 headers could also be extended to include the QCI of the S1 payload.

In this context it is important to note that the QoS class is not only indicating the QoS that should be provided to the service data on the air interface between the relay node and the user equipment(s), but the QoS class is indicated the QoS the service data should receive within the entire mobile communication system, including the transport network layer (TNL) between core network and the base station, the wireless interface between base station and the relay node and also the wireless interface between relay node and user equipment. The QoS class is thus controlling their respective radio bearer level packet forwarding treatment on the respective interface, including the configuration of individual protocol entities in the protocol stack (like RLC entity and MAC entity in on the wireless interfaces of the communication system).

In a 3GPP network, a QoS Class Identifier (QCI) is used for indicating the QoS class a service is belonging to. The QCI is a scalar that is used as a reference to access node-specific parameters that control radio bearer level packet forwarding treatment (e.g. scheduling weights, admission thresholds, queue management thresholds, link layer protocol configuration, etc.) - see also 3GPP TS 36.300, "Evolved Universal Terrestrial Radio Access (E-UTRA) and Evolved Universal Terrestrial Radio Access Network (E-UTRAN); Overall description; Stage 2 (Release 8)", version 8.8.0, section 13 (available at http://www.3gpp.org and incorporated herein by reference). On the S1 interface, each S1 PDU (e.g. GTP-U PDU / S1-AP PDU) is indirectly associated with one QCI via the radio bearer identifier carried in the PDU header. In case of a 3GPP LTE-A network, the QoS class is thus not only indicating the QoS that should be provided to the service data on the Uu between the relay node and the user equipment(s), but the QoS the service data should receive in the entire extend of 3GPP transport including the access and the core network (i.e. Uu, Un and S1 interfaces in this application).

Hence, the QoS class also implies QoS treatment on the transport network layer interfaces (e.g. S1-u and S1-MME) between core network and the eNode B. The QoS class is controlling the service data's radio bearer level packet forwarding treatment on the respective interfaces. This is including the configuration of individual protocol entities in the protocol stack so as to provide proper scheduling weights for scheduling, admission thresholds, queue management thresholds, link layer protocol configuration, etc.

As an example, assume a situation where several user equipments connected to the relay node have established Voice-over-IP (VoIP) sessions - i.e. some IP packets arriving at the base station will indicate a "VoIP QoS class" - and some user equipments run delay insensitive services like browsing the Internet - i.e. some IP packets arriving at the base station will indicate a delay-insensitive QoS class. In this scenario and using QoS class-based multiplexing the base station could establish a radio bearer to the relay node for IP packets of the VoIP services and another radio bearer to the relay node for IP packets of the delay insensitive services.

Looking into the IP packets, the base station can determine which IP packet belongs to which service type (respectively QoS class) and can map the IP packet to the correct radio bearer. Furthermore, in a more advanced example, the base station may additionally consider the QoS class of the IP packets on the radio bearers in the prioritization/scheduling/resource allocation for the respective radio bearers. Similarly, the QoS class may also be considered in the configuration of the radio bearers. For example, for the VoIP service the RLC entity may be operated in transparent mode while for the delay insensitive services same may be operated in acknowledgment mode.

Fig. 6 shows another flow chart to an exemplary embodiment of the invention which is illustrating in further the transmission of multiplexed IP packets on a dedicated radio bearer in the above examples given with respect to Fig. 4 and Fig. 5. The exemplary procedure outlined in the following with respect to Fig. 6 is performed for each radio bearer, so that the further explanations apply to the single bearer multiplexing mode and the multiple bearers multiplexing mode. Each radio bearer on the wireless interface between the base station and the relay node may be assumed to be scheduled by the base station. I.e. the base station is allocation physical resources (grant) to the relay node for transmissions on per radio bearer basis.

In the multiple bearers multiplexing mode, the IP packets arriving at the base station are multiplexed by a QoS multiplexing unit of the base station to the different dedicated radio bearers based on their QoS class. This can be also considered a "grouping" of the IP packets into groups of IP packets for each radio bearer. In the access stratum, the data of a radio bearer (e.g. the individual groups of IP packets) is mapped to a logical channel and is buffered in a buffer of the logical channel before the (now logical channel) data is multiplexed to a transport block. Essentially, the allocated resource corresponds to a certain amount of bits allocated to the relay node, referred to as the transport block size. The base station determines 601 the transport block size corresponding to the resource allocation by the scheduler and the MAC entity multiplexes 602 data from the buffer of the logical channel to which the data of a radio bearer is mapped to a transport block of the given transport block size (MAC multiplexing).

In other words, the MAC entity multiplexes the IP packets from the different user equipments that have been grouped by the QoS multiplexing unit to the respective radio bearer to a transport block(s). Subsequently the formed transport block(s) is/are transmitted 603 to the relay node on the allocated physical resources.

Upon having discussed details on the operation of the base station according to different embodiments of the invention, it is next focused on the operation of the relay node when acting as a triggering entity for changing the multiplexing mode of the base station. Fig. 7 and Fig. 8 show two exemplary flow charts for triggering a switching of the multiplexing mode by a relay node according to exemplary embodiments of the invention. In Fig. 7, the switching from the single bearer multiplexing mode to the multiple bearers multiplexing mode is exemplified. For example, in response to the setup 701 of a new radio bearer between a user equipment and the relay node, the relay node checks 702 whether the multiplexing mode needs to be changed.

This determination may be for example based on the number of radio bearers the relay node has established towards the user equipments connected to it as indicated in Fig. 7, as one may assume that the load of the relay node as well as the diversity in the QoS for the different services is increasing with an increasing number of radio bearers being established. Alternatively or in addition, the base station may also consider how many radio bearers per QoS class have been established towards user equipment(s) to decide that IP packets of this QoS should be multiplexed to a "separate" radio bearer to allow for better QoS control.

Another alternative or additional parameter may be a consideration of the configuration of the single radio bearer presently used to provide the IP packets to the relay node from the base station. As it may be assumed that the base station is not aware of the QoS classes of the services of the user equipments connected through the relay node, the single radio bearer of the single bearer multiplexing mode may not match the QoS requirements of the various services provided to the user equipments by the relay node, so that resource allocation on this single radio bearer by the base station may be insufficient to ensure the QoS expected by a service of a given QoS class. This pertains not only to the allocation of the resource on the single radio bearer between the base station and relay node but also to corresponding configurations of the RLC entity and MAC entity of the single radio bearer.

Furthermore, another criterion for deciding to switch to multiple bearers multiplexing may be the service types (QoS classes of the radio bearers between the user equipments and the relay node. Exemplarily assume that the user equipments have only set up sessions that essentially have a QoS profile of a background type service having very low demands on delay but allow for no errors in the transmissions. Further assume that the radio bearer between the base station and the relay node is configured according to this QoS profile (i.e. a corresponding QoS class). If a user is now establishing a VoIP service, requiring very low delay but is tolerating data loss, this QoS profile may hardly be matched with the QoS profile of the established services. I.e. some QoS classes may be incompatible. Hence, the relay node may decide to switch to multiple bearers multiplexing, if it recognizes that a new service with a QoS class being incompatible with the requirements of a service with another QoS class is set up.

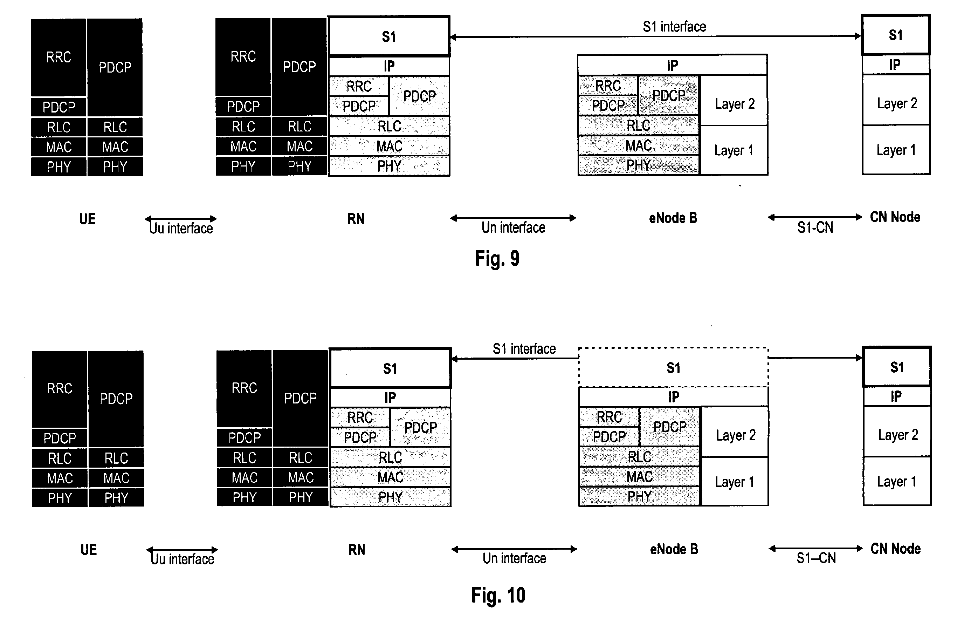

As already indicated before, the concepts of this invention are also applicable to a LTE-A system that is currently standardized by the 3GPP. In particular, the invention is applicable to situations where the user equipments are served in a "relay" configuration, i.e. where user equipments are connected to a relay node via their radio interface, the so-called Uu interface. As for example shown in Fig. 3, the relay node (RN) is further connected to the core network (CN) via a base station, referred to as an eNode B or eNB in the 3GPP terminology. Fig. 9 shows an exemplary overview of the protocol stack in user equipment (UE), relay node (RN), eNode B (eNB) and the core network (CN Node) for use in a 3GPP-based network according to an exemplary embodiment of the invention, where the eNode B is multiplexing the IP packets destined to the relay node for provision to the attached user equipments to one single dedicated radio bearer.

The relay node terminates the Uu interface on the RRC layer. Accordingly, the relay node is implementing all layers of the access stratum protocols of the access network and is thus also aware of the services (radio bearers) and their QoS requirements. The protocol stack on the Uu interface comprises the Physical Layer (PHY), the Medium Access Control (MAC) protocol, the Radio Link Control (RLC) protocol, the Packet Data Convergence Protocol (PDCP), and the Radio Resource Control (RRC) protocol.

The Un interface between the relay node and the eNode B is also a wireless interface so that the lower layer protocol stack is similar to the Uu interface. Please note that in this example, PDCP may be used in combination with the RRC protocol or not.

As can be further recognized from Fig. 9, the network layer in the access network and the core network may include the IP protocol (e.g. IPv4 or IPv6). On top of the IP protocol, the S1 interface protocol is indicated. The S1 interface is terminated by the core network, and is transparent to the eNode B, which is implementing a protocol stack only up to the IP protocol. Please note that "transparent" means here that the eNode B is not terminating the S1 interface/protocol, i.e. is not acting on the S1 interface messages.

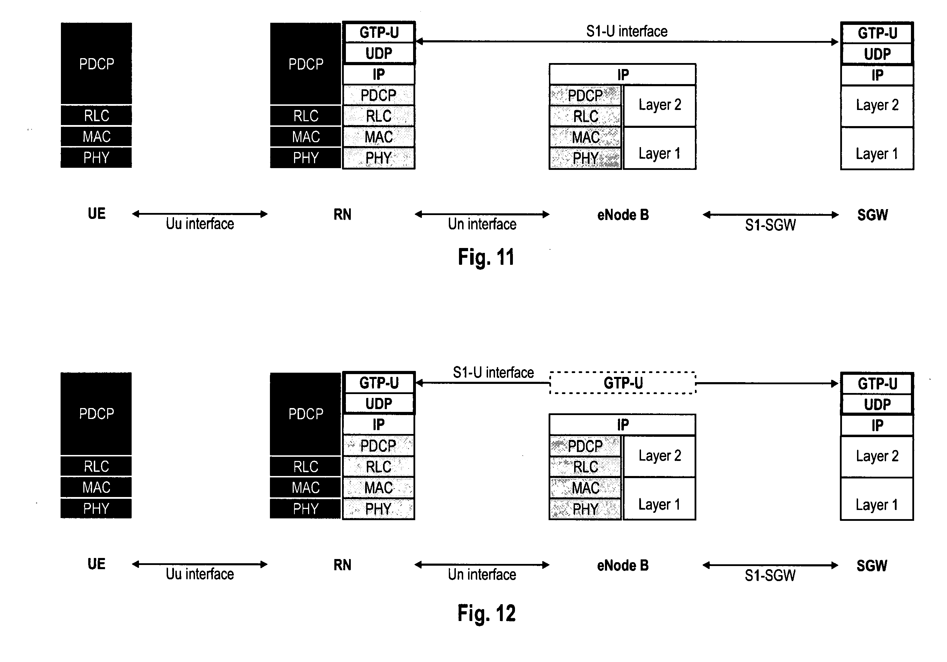

As further shown in Fig. 9, the protocol stack in the eNode B towards the core network (CN Node) is referred to as the S1-CN interface here, as its name depends on the core network node the eNode B is connected to (see Fig. 11 to 14). Generally, this interface may be assumed to be a wired interface. As the protocol stack is implementation dependent (typically ATM is used), the protocol layers are only indicated as Layer 1 and Layer 2. On the core network side, it is of importance only, that the IP protocol is implemented for transport of the data and the S1 interface is terminated towards the relay node.

The transport mechanism of data within the wired part of the network (here the core network internal transport and transport up to the eNode B) is commonly referred to as the Transport Network Layer (TNL). Radio bearers of the TNL are also referred to as radio access bearers. As indicated previously, the S1 interface is transparent to the eNode B. The S1 protocol data (packets) are encapsulated in the IP layer into IP packets.

For all services (radio bearers) of the user equipments attached to the relay node towards same, the relay node has a (logical) S1 interface connection towards the core network, which provides the service data to the relay node.

Fig. 10 shows an exemplary overview of the protocol stack in UE, RN, eNode B (eNB) and the core network (CN Node) for use in a 3GPP-based network according to an exemplary embodiment of the invention, where the eNode B is multiplexing the IP packets destined to the relay node for provision to the attached user equipments to one multiple dedicated radio bearers on a QoS class-basis as discussed previously. As will be explained below in further detail, the eNode B is obtaining the QoS class of an IP packet from the S1 interface header comprised within the payload of the IP packets routed via the eNode B to the relay node. This is indicated by the dotted line of the indicating the S1 interface at the eNode B. Please note that the eNode B is not acting upon the S1 protocol, but is only obtaining information from the S1 protocol headers. Hence, the protocol stacks of Fig. 9 and Fig. 10 are identical concerning the termination of protocols.

Fig. 11 and Fig. 12 show an exemplary architecture of the protocol stack of the user plane in UE, RN, eNode B (eNB) and the core network (CN Node) for use in a 3GPP-based network according to an exemplary embodiment of the invention. Fig. 11 and Fig. 12 essentially correspond to Fig. 9 and Fig. 10, except for a more detailed view of the S1 user plane configuration of the protocol stack. The user plane is typically provided to the eNode B via the S1-u interface towards a Serving Gateway (SGW). The user plane is transporting the user data/service data (e.g. IP packets, voice, etc.) of the users (user equipments). The S1 interface for the user plane is commonly also referred to as the S1-U interface. The S1-U interface is making use of the UDP protocol and the GTP protocol for user plane (GTP-U).

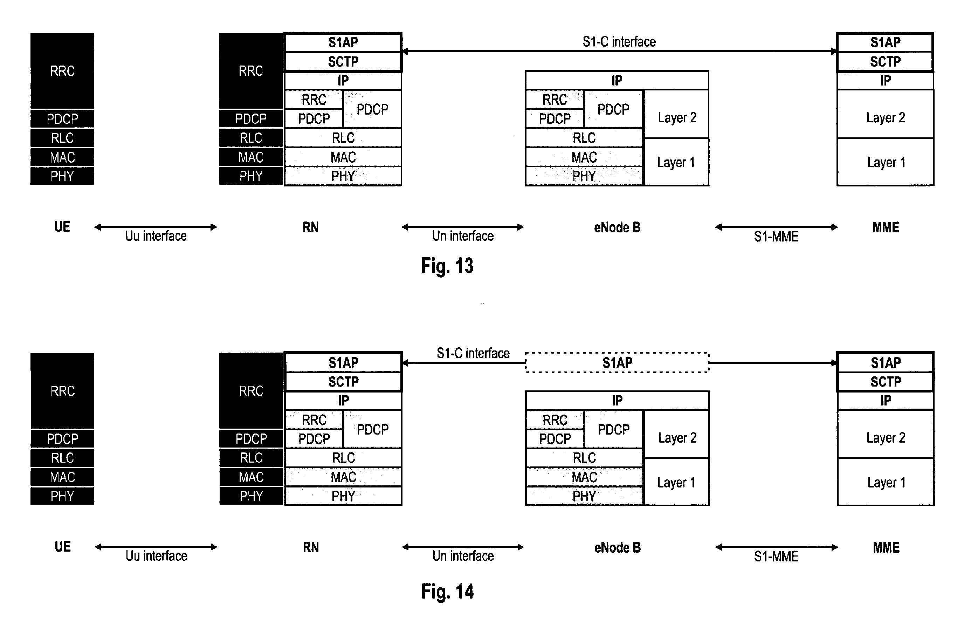

Fig. 13 and Fig. 14 show an exemplary architecture of the protocol stack of the control plane in UE, RN, eNode B (eNB) and the core network (CN Node) for use in a 3GPP-based network according to an exemplary embodiment of the invention. Fig. 13 and Fig. 14 essentially correspond to Fig. 9 and Fig. 10, except for a more detailed view of the S1 control plane configuration of the protocol stack. The control plane is typically provided to the eNode B via the S1-MME interface towards a MME. The control plane is transporting the control data/messages of the S1-Application Protocol (S1-AP). The S1-AP protocol is comprising an implicit indication of the QoS class, which is monitored by the eNode B so as to map the IP packets from the core network (here MME) to the correct dedicated radio bearer of the Un interface. This is indicated in Fig. 14 by showing the S1-AP protocol in a dotted rectangle for the eNode B.

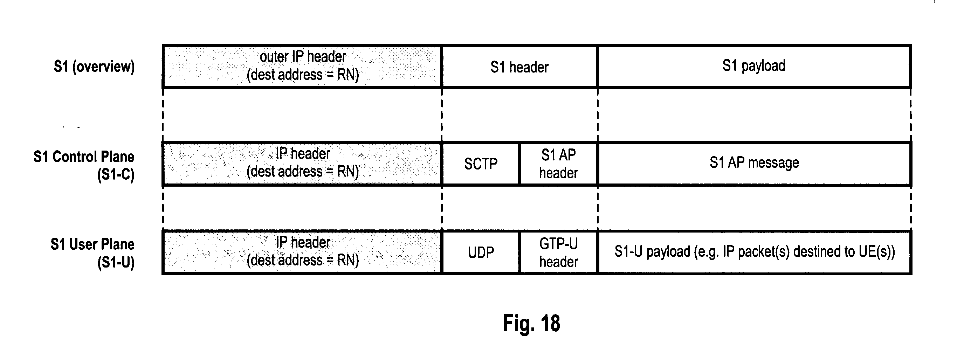

Fig. 18 shows the exemplary structure of IP packets forwarded from the core network via the base station (eNode B) to a relay node, according to the protocol stacks shown in Fig. 9 to 14. Generally, for the purpose of this invention, it can be assumed that the outer IP header added for routing the S1 packets from core network to the relay node and that this header is indicating the relay node's IP address. Following this outer IP header of the IP packet, the IP packet's payload section comprises a S1 header of the S1 user plane or control plane protocol followed by the S1 payload (which is for example the service data or a S1 control message).

Fig. 18 further shows a more detailed IP packets structure for the control plane and the user plane. Please note that these two examples are only intended for exemplary purposes and the details of the S1 interface implementation may be different from these examples. The outer IP header can be assumed to comprise a normal IP header in the user plane and control plane scenario. For the control plane S1 interface, it is exemplarily assumed that the S1 interface is implemented by the SCTP protocol and the S1-AP protocol. The S1 header is thus including a SCTP header and a S1-AP header and the S1 payload contains the S1-AP control message. For the user plane S1 interface, it is exemplarily assumed that the S1 interface is implemented by the UDP protocol and the GTP-U protocol. The S1 header is thus including a UDP header and a GTP-U header and the S1 payload contains the S1-AP control message.

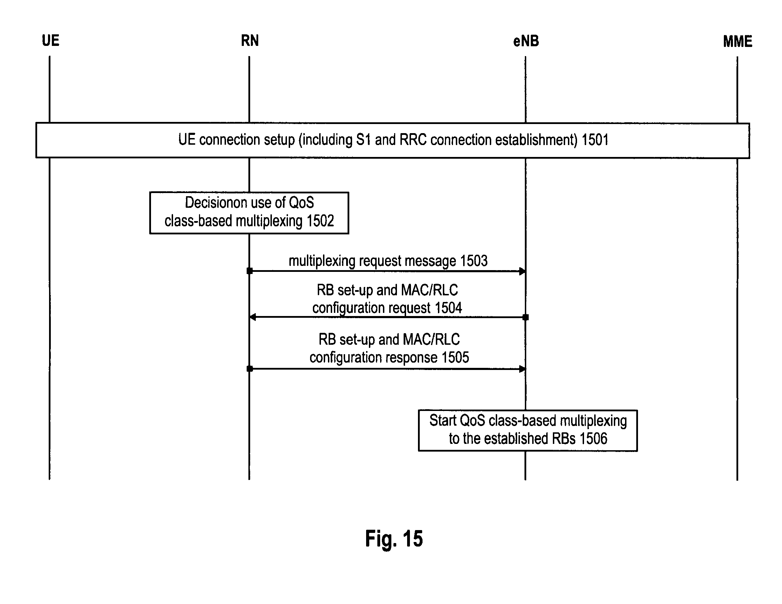

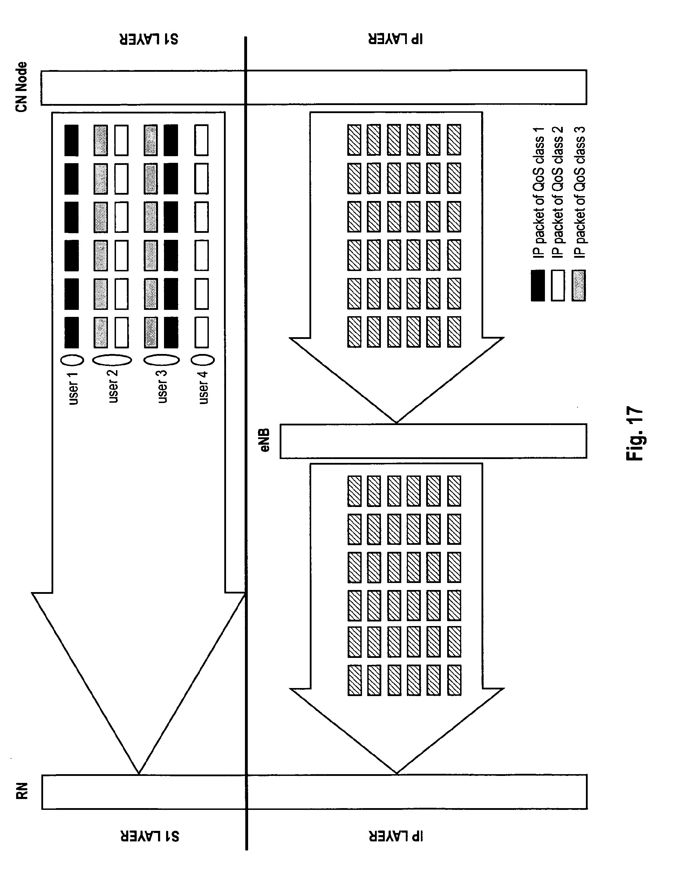

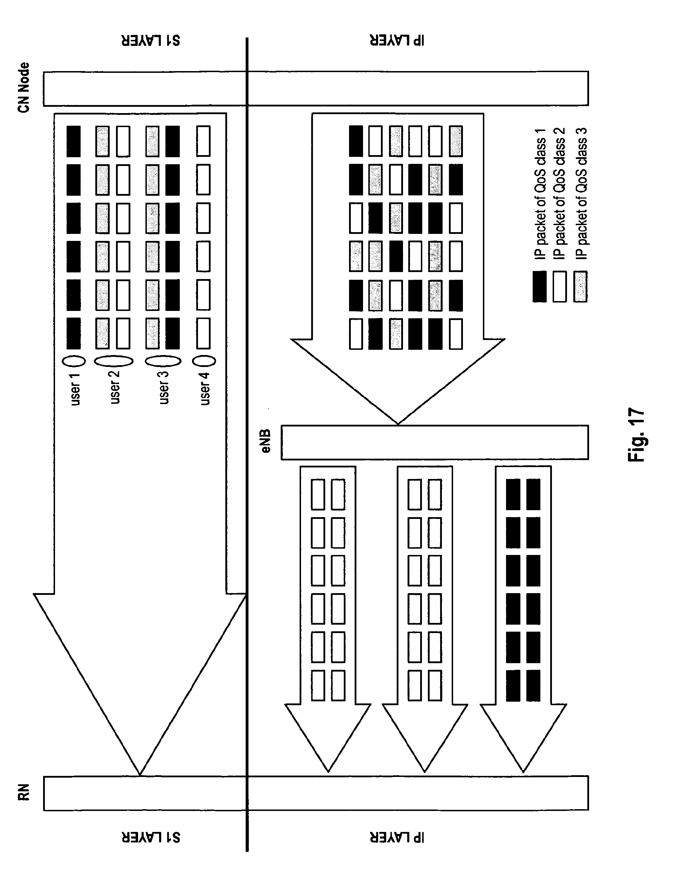

Next, a more detailed example of the implementation of the concepts of this invention in a 3GPP LTE-A system is exemplified with respect to Fig. 15, Fig. 16 and Fig. 17 below. Fig. 15 shows an exemplary signaling within a 3GPP LTE-based network according to an embodiment of the invention, when switching the multiplexing mode from a single radio bearer multiplexing mode to a multiple bearers multiplexing mode. Fig. 16 and Fig. 17 show exemplary the forwarding of IP packets between the core network and an eNode B (eNB), and the eNode B (eNB) and a relay node, prior and after switching the multiplexing mode in the eNode B (eNB).

Fig. 16 exemplifies the initial situation assumed in Fig. 15 where the relay node is provided with IP packets for different services and/or for different users (user equipments) from the core network via one single radio bearer between the eNode B and the relay node. On the S1 layer of the protocol stack, it is possible to distinguish the different S1 radio access bearers, i.e. the users and QoS class of each bearer is known (see upper part of Fig. 16, where the packets are shaded differently). At IP layer level (transport network level), on the network side (S1-CN interface, i.e. S1-u or S1-MME interface), a core network node (CN Node) provides the IP packets with a destination address being the IP address of the relay node to the eNode B. The IP packets' payload is carrying S1 PDUs (i.e. service data with a S1 header) of different QoS classes as indicated by the different colors of the rectangles indicating individual IP packets.

However, as the S1 interface is assumed to be transparent to the eNode B, same cannot distinguish the different S1 radio access bearers on the IP layer so that there is no distinction of QoS classes (and user equipments) possible on the IP layer - unless mechanisms like DiffServ are implemented on the core network-to-eNode B interfaces (S1-U, S1-MME). Accordingly, as indicated on the lower part of Fig. 16, from the eNode Bs perspective on the IP layer all IP packets arriving look the same as indicated by the similar shading of the IP packets. All IP packets arriving at the eNode B and being destined to the relay node according to the (outer) IP header are multiplexed by the eNode B to the one dedicated radio bearer for provision to the relay node, without making any distinction of their QoS class.

In the exemplary embodiment shown in Fig. 15, it is assumed that a user equipment is setting up 1501 a new connection, e.g. by requesting a new service, which is resulting in the establishment of a further radio bearer on the Uu interface of the relay node. In this connection establishment procedure, the MME controls the relay node to set up a S1 radio access bearer between the relay node and its serving gateway (SGW) in the core network for transporting user plane data of the new connection of the UE. Hence each radio bearer of a user equipment on the Uu interface has a corresponding S1 radio access bearer between the relay node and the core network. The relay node checks whether the criteria for switching from single radio bearer multiplexing to multiple radio bearers multiplexing are met (see above) and takes the decision 1502 that multiple radio bearers multiplexing should be used for better QoS control and resource utilization.

Accordingly, the relay node sends 1503 a trigger to which the multiplexing mode to the eNode B by means of a multiplexing request message.

Generally, this multiplexing request message indicates to the eNode B (base station) that multiple bearers should be used. The message may further indicate how the eNode B should group/multiplex the IP packets arriving from the core network to the dedicated radio bearers. Another possibility is that there is a default configuration so that the message is implying that the eNode B should map IP packets carrying data of a respective QoS class to a respective radio bearer. In this latter case there could be for example a one-to-one mapping of QoS classes and radio bearers, so that all IP packets of a given QoS class arriving at the eNode B and destined to the relay node would be multiplexed to one corresponding radio bearer.

For example, in one exemplary embodiment of the invention, the message sent from the relay node to the eNode B may indicate (explicitly or implicitly) IP packets of which bearers of the (logical) interface between the relay node and the core network are to be multiplexed to the different dedicated radio bearers between the relay node and the eNode B. For example, the relay node may indicate the Tunnel Endpoint IDentifier(s) (TEID(s)) of the S1 radio access bearers that should be multiplexed by the eNode B to a respective radio bearer no the Un.

In another one exemplary embodiment of the invention, the multiplexing request message could indicate which QoS class or classes should be mapped to one radio bearer. This could be for example be realized by signaling the QCI of the class(es) to be multiplexed to a single radio bearer. If the multiplexing request message does not define the mapping rule for all QCIs defined in the system, the eNode B could assume that the IP packets of the remaining QoS classes should be grouped to one radio bearer.

For example, if there are five QoS classes defined, i.e. there are five QCI values QCI1 to QCI5, the relay node could indicate that IP packets indicating QCI1 and QCI2 should be multiplexed to a first radio bearer, and IP packets indicating QCI3 should be multiplexed to a second radio bearer. This causes the eNode B to do so and to multiplex the IP packets of "undefined" CQI4 and CQI5 to a third radio bearer on the wireless interface between relay node and eNode B.

In a further exemplary variant, the relay node may also include information o the channel quality and resource allocation on the relay node's interface to the user equipments to the multiplexing request message. This may improve the resource assignment efficiency over the interface between the relay node and the eNode B. For example, the relay node could include CQI (Channel Quality Indicator) information of the user equipments on the Uu interface to the request message sent to the eNode B. Advantageously, the relay node periodically updates this information by periodically reporting the CQIs of the user equipments. In addition or alternatively, the relay node could also signal information on the scheduling/resource allocation of the user equipments, such as for example a modulation and coding scheme index (MCS index). As the CQI, also this scheduling/resource allocation related information is providing information on the data rate of the user equipments on the radio channels between the user equipments and the relay node which can be considered by the eNode B when deciding how much service data of a user should be multiplexed to a radio bearer. For example, the number of resource blocks on physical layer for a multiplexed QCI flow over the Un interface could be made to follow on the user equipments reported CQIs on the Uu interface.

Generally it can be assumed that the eNode B does resource assignment per user equipment/relay node over the QCI-based multiplexed transport block on the Un interface. In addition this resource assignment for a specific on of the radio bearers is not dependant on the conditions over Un interface but instead on the Uu interface. For example, the amount of physical resource blocks that the eNode B is going to use for the transport block of a dedicated radio bearer on the Un interface carrying data with same QoS class corresponding to different user equipments could be distributed according to the information on the channel quality of the different user equipments over the Uu side. Thus, within one transport block of a QoS class-dedicated radio bearer, the allocation of resource blocks is based on the Uu conditions of the different user equipments which in turn result in more efficient utilization of the resources over the Un interface. The CQI information could also be used as prioritization parameter when the transmission slots on Un are limited - hence with more efficient utilization of the radio resources.

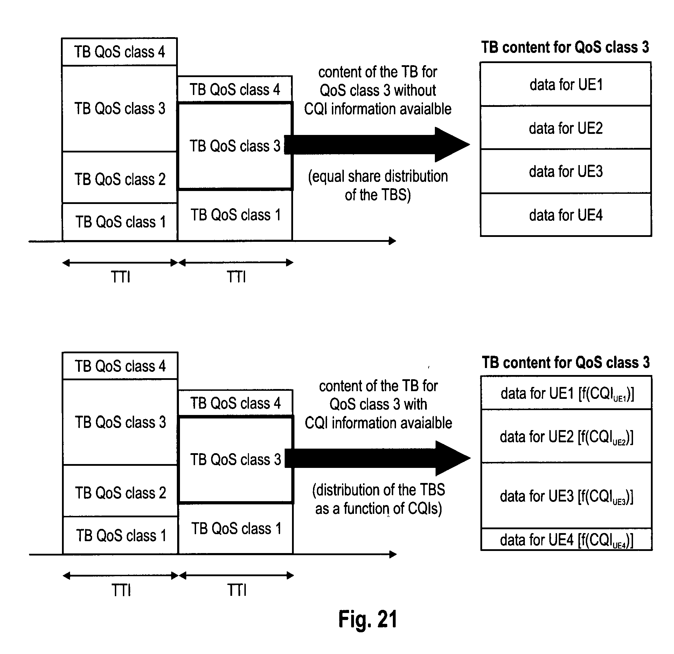

Fig. 21 shows the exemplary multiplexing of data (IP packets) of different user equipments to transport blocks with and without utilizing channel quality information (CQI information) of the user equipments according to an embodiment of the invention. In Fig. 21 it is assumed that multiple bearers multiplexing is used so that - according to the allocated resources (yielding the transport block size) for each radio bearer - a transport block for each radio bearer is generated in a transmission time interval. Each transport block contains data (IP packets) of the same QoS class. In the upper part of Fig. 21 an example is shown where no information on the channel quality on the Uu interface is available so that the transport block size for a respective radio bearer is equally distributed to the data of a QoS class and for different users. On the lower part of Fig. 21, CQI information of the user equipments on the Uu interface is available. Accordingly, the eNode B may consider the Uu channel quality in filling the transport blocks of the different radio bearers.

Returning to Fig. 15, the eNode B may need to establish additional radio bearers and/or reconfigure existing radio bearer(s) when being instructed to switch to multiple bearers multiplexing mode. Accordingly, the eNode B sends 1504 a Radio Bearer (RB) setup and RLC/MAC reconfiguration message to the relay node to set up and/or reconfigure the radio bearers required by the desired multiple bearers multiplexing operation. The configuration of the radio bearers may also include the configuration of the RLC entity and the MAC entity (respectively the associated protocols). This configuration should be according to the QoS class(es) of the IP packets to be multiplexed to the respective radio bearer. For this purpose there may exist certain predefined configurations of the RLC and MAC layer for each QoS class. If IP packets of more than one QoS class are to be multiplexed to one radio bearer, the radio bearer may be configured according to the highest QoS demand.

Upon configuring the radio bearers at the relay node including the configuration of the respective RLC/MAC entities in the relay node, the relay node responds 1505 to the Radio Bearer (RB) setup and RLC/MAC reconfiguration message with a Radio Bearer (RB) setup and RLC/MAC response message which is informing the eNode B that it may now start multiplexing 1506 of the IP packets to the different radio bearers according to their QoS class.

As indicated above, the QCI may be contained in some header information of the IP packets destined to the relay node that are received by the eNode B. In a state of the art 3GPP LTE architecture, no QCI is contained in the S1 headers. Nevertheless, the S1 headers contains still information based on which the eNode B can conclude on the QoS class of the IP packet's payload data so that it may implement a QoS class-based multiplexing of the IP packets to different radio bearers. For identifying IP packets comprising control information and that are thus belonging to the QoS class for control information, it is sufficient that the eNode B detects the presence of an S1-AP header in the IP packet. If the S1-AP header is present, the eNode B can conclude that the IP packet's QoS class is the QoS class for control information. Alternatively, the eNode B could monitor the IP source address of the "outer" IP header and if it is matching the address of an MME, the eNode B can conclude that the IP packet's QoS class is the QoS class for control information as the MME is the core network node from which control plane traffic originates.

To identify the QoS class for IP packets carrying user plane data, the eNode B could undertake the following steps. As indicated above the MME controls the S1 radio access bearer setup (the so-called S1 E-RAB Setup procedure (E-RAB = E-UTRAN Radio Access Bearer) - see 3GPP TS 36.413, "Evolved Universal Terrestrial Radio Access Network (E-UTRAN); S1-Application Protocol (S1-AP) (Release 8)", version 8.5.1, available at http://www.3gpp.org and incorporated herein by reference) between the relay node and its SGW for new UE connections during connection setup. The eNode B may intercept the control plane messages sent from the MME to the relay node setting up the S1 radio access bearer between relay node and the serving gateway (SGW). The eNode B can identify IP packets from the MME based on the existence of the SCTP or S1AP header or alternatively on the source IP address of the MME in the respective IP packets. The S1-AP protocol messages from the MME contain the QoS class identifier (QCI) and the unique TE-ID (Tunnel Endpoint-Identifier) of the S1 radio access bearer. For example, E-RAB Setup Request (see 3GPP TS 36.413, section 9.1.3.1) sent from the MME to the relay node is a S1-AP message that reports QoS parameters (QoS class/QCI) and the TE-ID for the S1 radio access bearers to be set up for data transport.

The eNode B stores for each S1 radio access bearer its unique TE-ID and its specific QoS class (i.e. QCI). Having learned the association between the TE-ID and the QoS class of the different S1 radio access bearers, the eNode B when operating in the multiple bearers multiplexing mode can look up the TE-ID field in the GTP-U header within the each IP packet (see Fig. 18) and identify the QoS class associated to the S1 radio access bearer identified by the TE-ID. This QoS class is thus the QoS class of the he S1 payload information in the IP packets. Having identified the QoS class for the IP packet, the eNode B can map the IP packet to the appropriate radio bearer on the Un interface.

An alternative solution according to a further embodiment of the invention is that the relay node informs the eNode B on the mapping of TE-IDs and QoS classes (QCls) for the S1 radio access bearers. The relay node may for example provide the TE-ID-to-OCI mapping of the S1 radio access bearers to the eNode B when sending the multiplexing request message. Furthermore, in embodiments where the eNode B is further considering the channel quality of the user equipments on the Uu interface to the relay node, the relay node may further include information on the association between UE-IDs and TE-IDs so that the channel quality information that are reported per user equipment (UE-ID) can be mapped to the TE-IDs.

In the example given with respect to Fig. 15 above, the switching from single bearer multiplexing to multiple bearers multiplexing has been described. Essentially, a similar procedure may be preformed when switching from multiple bearers multiplexing mode to single bearer multiplexing mode. For example, when one or more user equipments terminate their service, the number of remaining radio bearers between user equipments and the relay node may allow for single bearer multiplexing of the IP packets arriving at the eNode B. As the monitoring of the QoS class and the QoS multiplexing to the radio bearers is also requiring processing power it may be desirable to reduce the processing load of the eNode B by switching to single bearer multiplexing again. Similar to the case in Fig, 15, the relay node may send a multiplexing request message to the eNode B that requests switching to the single bearer multiplexing mode. Optionally, this message could include an indication of a QoS class (e.g. by means of a CQI) according to which the single radio bearer should be configured.

The eNode B reconfigures the multiple radio bearers such that only one radio bearer remains (e.g. by tearing down all existing radio bearers and establishing a single new one, or by tearing down all radio bearers except for one). This may be implemented using standard RRC procedures (RB setup/ RB reconfiguration). Furthermore, the one remaining radio bearer may be (re-)configured according to the QoS requirements implicit to the QoS class indicated in the multiplexing request message.

In a further variant, the multiplexing request message does not necessarily have to switch the multiplexing mode, but is only used for reconfiguring the presently used multiplexing mode. Returning to the example of Fig. 15 again, the eNode B may decide in step 1503 that although a new radio bearer has been established towards a user equipment, single bearer multiplexing of IP packets on its interface to the eNode B is still acceptable from a QoS and resource utilization point of view, if the established one radio bearer is reconfigured. For example, if the new service that led to the establishment of a radio bearer requiring higher QoS than currently configured for the radio bearer and this higher QoS is compatible with the QoS of the other existing services (in terms of the QoS requirements of the services not being contradictory - e.g. low delay typically excludes error free transmission, and vice versa) the radio bearer could be simply reconfigured according to the more demanding QoS class of the new service. For this purpose, the multiplexing request message sent by the base station could indicate a reconfirmation of the single radio bearer being requested, and further the QoS class according to which the radio bearer should be reconfigured. The eNode B would then react to this request by sending a RB reconfiguration message to the relay node with the new RLC/MAC entity configuration.

Next another aspect of the invention related to the mapping of the IP packets received at the base station from the core network to the physical resources is discussed in further detail. One additional benefit of performing the multiple bearers multiplexing is that - on physical layer - it is possible to minimize overhead (e.g. implied by the MAC header for each bearer) in comparison to using single bearer multiplexing. Since multiple user equipments' data is multiplexed according to their QoS class, and assuming that there is only a given maximum number of radio bearers set up between base station and relay node (i.e. this maximum number corresponding to the number of different QoS classes defined in the system), there are much less physical downlink control channels (e.g. PDCCHs in a 3GPP LTE-A network) required over the wireless interface between base station and relay node that would be otherwise required per user equipment when using a single radio bearer. Hence, multiple bearers multiplexing on the wireless interface between base station and relay node may allow for more efficient resource utilization on this wireless interface.

In the following, an exemplary embodiment of the invention related to the access stratum processing of the radio bearer data will be described focusing on the physical layer processing. In order to do multiplexing in the access stratum protocols, additional headers and/or fields may be defined in the physical control channels (e.g. PDCCH and/or PDSCH) on the wireless interface between the base station and the relay node.

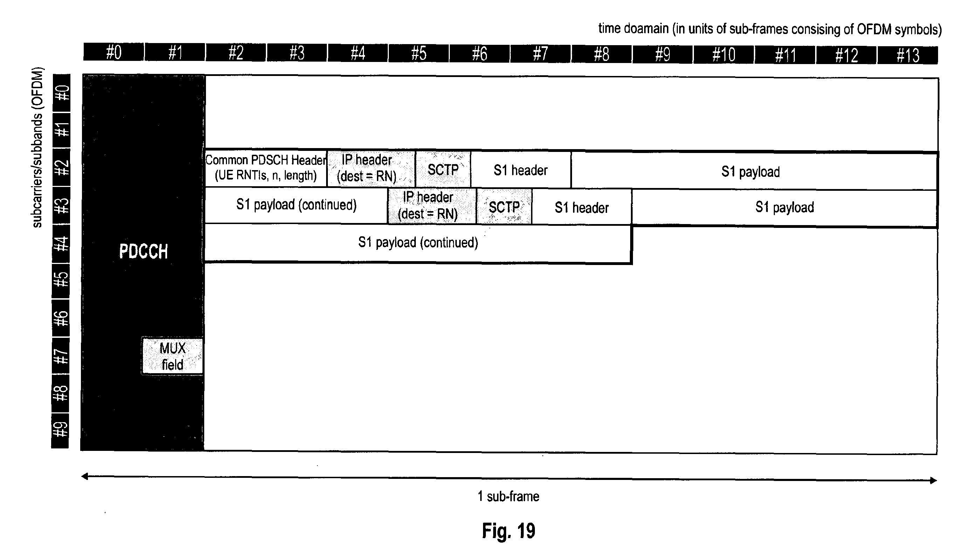

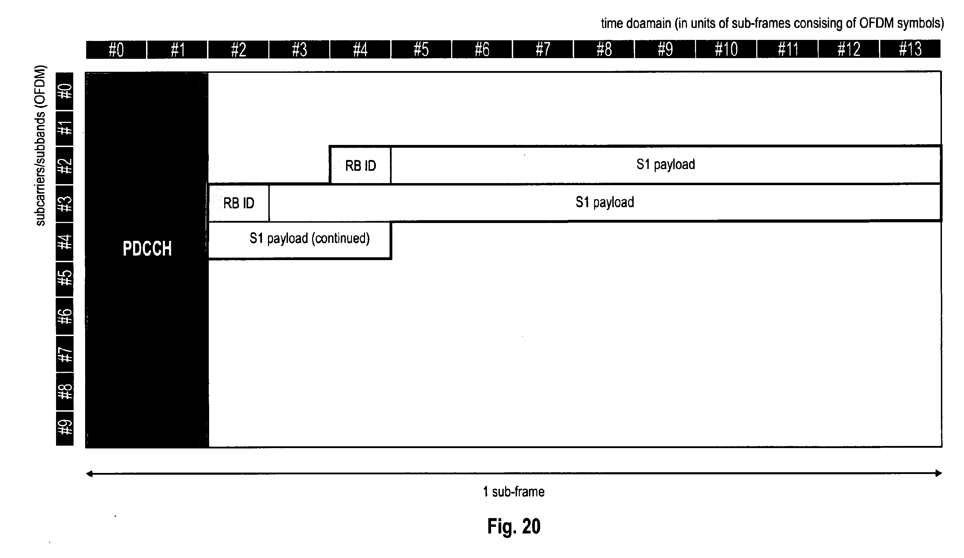

Fig. 19 and 20 show the mapping of multiplexed IP packets to physical channel resources by the base station according to exemplary embodiments of the invention within a transmission time interval (TTI) which is assumed to correspond to the duration of one sub-frame. The sub-frame consists of a number of OFDM symbols in the time domain that each covers a certain frequency range. The PDCCH(s) for the receivers of the sub-frame are comprised in the first two OFDM symbols. The remaining OFDM symbols of the sub-frame contain the PDSCH. Alternatively, also a sub-frame configurations as proposed in the co-pending EP application no. 09 005 715.9 (incorporated herein by reference) of the same applicant filed April 23, 2009 (the PDSCH region of the sub-fame is corresponding to the RDC region therein) could be utilized.

According to the embodiments shown in of Fig. 19, a Multiplexing Field (MUX field) is introduced in the PDCCH region of the sub-frame. The MUX field the PDCCH contains:
- ON/OFF flag for indicating whether or not there is QoS multiplexing of multiple UEs within the transport block and for indicating the presence of the Common PDSCH header,
and if QoS multiplexing is used:
- an indication of the size of Common PDSCH header and
- an Indication of the number of IP packets multiplexed in the transport block on the PDSCH (optional).

In the PDSCH region of the sub-frame the transport block for the relay node may comprise a Common PDSCH header (see Fig. 19). The Common PDSCH header is basically the MAC PDU header after the RLC entity and MAC entity of the dedicated radio bearer has mapped the data (multiplexed IP packets of the dedicated radio bearer) into the transport block to be sent over the physical resources.

The Common PDSCH header defines the number of IP packets (n) and size of each IP packet comprised within the transport block. Optionally, the Common PDSCH each multiplexed UE-ID and the RB-ID in case this info is notified to the eNB by RN

Optionally as shown in Fig. 20, there could be no Common Header in PDSCH (hence no MUX field in PDCCH) and each multiplexed IP packet for a user equipment has a header that includes the UE-ID (C-RNTI) and size of transport block inside the PDSCH payload. Alternatively this header may only consist of the Radio Bearer Identifier (RB-ID) of a radio bearer on the Uu interface to the user equipment to which the IP packets should be mapped by the relay node. In this latter option shown in Fig. 20, the S1 interface will no longer be transparent to the eNode B.

To obtain a sub-frame structure as proposed above under reference to Fig. 19, the MAC layer multiplexing procedure at MAC entity within the eNode B could be for example implemented as follows. The control channel (PDCCH) will indicate first whether or not there is a multiplexed payload on the PDSCH transport channel (MUX field). The Common PDSCH Header will then indicate how the payload is multiplexed within the transport block.

On the reception side, the relay node received the sub-frame and checks if a MUX field is contained in the PDCCH region and a Common PDSCH Header is contained in PDSCH region of the sub-frame.

If the MUX field is present and indicating QoS multiplexing of multiple UEs within the transport block the relay node determines further from the MUX field the size (in bits) of Common PDSCH Header and (optionally) the number of IP packets that are multiplexed to the transport block on the PDSCH.

The Common PDSCH Header contains the number of packets multiplexed in this transport block (unless this information is already contained in the MUX field) and the length of each packet. Optionally it may contain the UE-ID of each user equipment whose packets are multiplexed to the transport block and/or the RB-ID of the radio bearer on the Uu interface to which the data in the transport block are to be mapped.

According to the size of each IP packet indicated in the Common PDSCH header, the relay node proceeds to decode each of the multiplexed IP packets sequentially and places them in the appropriate PDCP/RLC/MAC entities on the Uu side for transmission to the correct user equipments.

In the exemplary embodiments that have been described so far, focus has been given on the downlink data transmission from core network via a base station to a relay node and further to the user equipments. The concepts of multiple bearers multiplexing on the interface between relay node and base station and the switching thereof may also be utilized in the uplink direction. Essentially the concepts outlined above can be applied to the uplink scenario in a straight forward manner.

In contrast to the downlink scenario discussed above, the node that is aware of the QoS requirements of the services established on the wireless interface towards the user equipments and the node that needs to multiplex the service data of different QoS classes (and users) to the multiple dedicated radio bearers in the uplink direction on the wireless interface to the base station is the relay node. It can be assumed that also in the uplink case there exists a logical connection (e.g. S1 interface in 3GPP LTE-A) between a core network node and a relay node which is transparent to the intermediate base station. Accordingly, the exemplary uplink configuration and protocol stacks as shown in Fig. 9 to 14 also apply for the uplink scenario.

In this uplink scenario, the relay node could apply essentially the same criteria for deciding on the multiplexing mode as discussed before for the downlink scenario. Also the signaling - as exemplified in Fig. 15 - remains essentially unchanged. Again the relay node could send a multiplex request message to the base station that in the uplink scenario triggers the establishment/(re-)configuration of radio bearers. The multiplex request message could be essentially the same as in the downlink scenario. Alternatively, the multiplex request message could be realized as a RB set-up and MAC/RLC configuration request (similar to that in step 1504) to which the base station responds (similar to step 1505) so as to configure the radio bearers (and their RLC/MAC entities). Once the radio bearer(s) is/are configured for the multiple bearers multiplexing mode, the relay node could start multiplexing the uplink service data to the different radio bearers according to their QoS class.

Please note that the logical connection (e.g. S1 interface) may also be terminated by the base station instead of the relay node without affecting the role of the relay node. In this case the QoS classes of the transported uplink data would no longer be transparent to the base station and same could also request a desired multiplexing mode by sending a multiplex request message to the relay node. The relay node is in the position to multiplex the data first over the U_{N} interface and send the data per dedicated radio bearer to the eNode B Essentially, this would correspond to the procedures as shown in Fig. 15 with the roles of eNode B and relay node being exchanged.

In another embodiment of the invention, the base station (e.g. eNode B) triggers/decides on the multiplexing mode for the IP packets provided via the wireless interface to the relay node. For example, in a 3GPP LTE-A, the eNode B may monitor all IP packets from the core network that are destined to a relay node. The eNode B concludes on the QoS class of the respective IP packets as described above and keeps track of the number of S1 radio access bearers of a relay node per QoS class. This information is kept as soft state information for each relay node connected to the eNode B - note that no soft state information may be maintained for UEs directly attached to eNode B.

Based on this soft state information for each relay node, the eNode B can decide on the multiplexing mode on the Un interface and internally triggers a switch thereof or a reconfiguration of the radio bearer(s) as needed. Optionally, the eNode B may request information on the UEs channel quality on the Uu interface (COls of the UEs) from the relay node and may - at the same time - inform of the relay node on a change of the multiplexing mode/(re-)configuration of radio bearers on the Un interface. When requesting CQI information, the eNode B may for example include the UE-IDs of the user equipments for which it wants to receive the CQI information.

Similar to the examples discussed before, the eNode B may inform the relay node on the number of dedicated radio bearers to be set up, for example one radio bearer per QoS class with a single RLC/MAC entity. The relay node may confirm the setup and configuration of the radio bearers (and RLC/MAC entities). Thereupon the eNode B may start multiplexing the IP packets to the multiple radio bearers when using multiple bearers multiplexing. As soon as the CQI information on individual user equipments is provided from the relay node, more efficient resource assignment on the transport blocks is possible on the Un interface.

In a further exemplary embodiment, it may be assumed that due to limited eNode B capability (e.g. memory limitations) the eNode B cannot keep the soft state information required to take decisions on the multiplexing mode for the Un interface. In this case the eNode B may delegate the maintenance of the soft state information to the relay node by requesting to relay node to send information on the number of Uu / S1 radio bearers being established, the TE-IDs of the S1 radio access bearers and their QoS classes. The eNode B can decide on the delegation and will receive one more message before the multiplex request message. This multiplex request message will be then acknowledged by the relay node and the relay node may include the explicit information on which S1 radio access bearers of which QCI and which UEs and their CQIs to multiplex.

Another embodiment of the invention is related to situations where there is a switch by the network to a MBSFN configuration with less transmission opportunities on the downlink (the relay node may not simultaneously receive data from the eNode B and transmit date to the user equipments - see also co-pending EP application no. 09 005 715.9 for further explanations). Such change of the MBSFN configuration could indicate to the involved nodes (relay node and eNode B) to start using multiple bearers multiplexing on the Un interface. Since there may be fewer opportunities to send delay sensitive data due to the change in the MBSFN configuration, it may be advantageous to have the data "sorted" into levels of QoS on the radio bearer level so that the scheduler can decide more efficiently what and when to schedule data of which QoS class. For example, the scheduler at the eNode B could prefer resource allocation to the radio bearer carrying the delay sensitive data in its scheduling decision.

In the embodiments discussed above, either the base station (eNode B) or the relay node has taken the decision on which multiplexing mode to use on the interface between these two nodes. According to a further embodiment of the invention, such decision (and the triggering of the appropriate multiplexing mode) could also be taken by a core network node, such as the MME. This applies to downlink data transmission scenarios as well as to uplink data transmission scenarios.

In Fig. 15 (and Fig. 7) it has been exemplarily assumed that decision on the multiplexing mode is taken when a user equipment is establishing a new connection procedure (i.e. RRC connection setup and S1 setup in 3GPP LTE-A). Generally, it may be assumed that the core network node configuring the radio bearers (the MME in 3GPP LTE-A) is aware of the QoS classes of radio access bearers requested by the different user equipments. Further, this network node may also be assumed to be aware of which user equipments are served via a relay node. The core network node may therefore take a decision on whether multiple bearers multiplexing or single bearer multiplexing should be used on the interface between the base station and a relay node in the data path towards a group of user equipments connected to the relay node. Therefore, the core network node may trigger use of multiple bearers multiplexing or single bearer multiplexing. When implementing this alternative in a 3GPP LTE-A network the MME could send the multiplexing request message to the base station (for downlink scenarios) during the S1 connection setup procedure, and after the multiplexing mode is configured, the relay node could send a S1 setup complete message.

A further aspect of this invention is related to a communication system where only one multiplexing mode is used on the interface between the base station and the relay node. According to another embodiment of the invention, this multiplexing mode is the multiple bearers multiplexing mode according to one of the various embodiments described herein.

Another aspect of the invention and in another embodiment, concerns the operation of the base station with respect to determining the IP packets' QoS class. The determination of the QoS class for the IP packets may be realized as described in the different embodiments of the invention described herein above.

In some embodiment of the invention, the concepts of the invention have been described with respect to an improved 3GPP LTE system, where there is one component carrier configured on the air interface. The concepts of the invention may also be equally applied to a 3GPP LTE-Advanced (LTE-A) system presently discussed in the 3GPP.

Another embodiment of the invention relates to the implementation of the above described various embodiments using hardware and software. It is recognized that the various embodiments of the invention may be implemented or performed using computing devices (processors). A computing device or processor may for example be general purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the invention may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc.

It should be further noted that the individual features of the different embodiments of the invention may individually or in arbitrary combination be subject matter to another invention.

It would be appreciated by a person skilled in the art that numerous variations and/or modifications may be made to the present invention as shown in the specific embodiments without departing from the spirit or scope of the invention as broadly described. The present embodiments are, therefore, to be considered in all respects to be illustrative and not restrictive.

## Claims

1. A method for providing IP packets destined to user equipments connected to a relay node from a core network node to the relay node, wherein the IP packets are conveyed via a base station to the relay node on a wireless interface, the method comprising the step of:
switching between
- multiplexing the IP packets to one dedicated radio bearer and
- multiplexing the IP packets to multiple dedicated radio bearers
for provision to the relay node, wherein when multiplexing the IP packets to the multiple dedicated radio bearers the IP packets are multiplexed according to their QoS class that is controlling their respective radio bearer level packet forwarding treatment.

2. The method according to claim 1, where the switching is performed in response to a trigger of the base station, the relay node or a core network node.

3. The method according to claim 1 or 2, wherein method comprises the following steps performed by the base station:
receiving a trigger requesting the base station to switch from multiplexing the IP packets to the one dedicated radio bearer to multiplexing the IP packets to multiple dedicated radio bearers according to their QoS class, or vice versa,
multiplexing, according to the trigger received from the relay node, the IP packets received from the core network node to the one dedicated radio bearer or to the multiple dedicated radio bearers according to their QoS class, and
setting up the multiple dedicated radio bearer between the base station and the relay node in response to a trigger requesting the base station to multiplex the IP packets to multiple dedicated radio bearers according to their QoS class.

4. The method according to one of claims 1 to 3, further comprising the following steps performed by the base station when multiplexing the IP packets to multiple dedicated radio bearers according to their QoS class:
receiving the IP packets from the core network node, and
determining for a respective IP packet its QoS class.
multiplexing the respective IP packets to the multiple dedicated radio bearers according to their determined QoS class, and
transmitting the IP packets via one of the respective dedicated radio bearers to the relay node.

5. The method according to one of claims 1 to 4, further comprising the step of scheduling by the base station transmissions of multiplexed IP packets on the individual dedicated radio bearers to the relay node and wherein scheduling comprises allocating physical channel resources to the relay node per dedicated radio bearer.

6. The method according to claim 1 or 2, wherein the method further comprises the steps of:
monitoring the IP packets by the base station to obtain from the IP packets identifiers of the user equipments to which the IP packets are to be provided by the relay node and the QoS class of the respective IP packets,
deciding at the base station based on the monitored information, whether to switch from multiplexing the IP packets to one dedicated radio bearer to multiplexing the IP packets to multiple dedicated radio bearers, or vice versa, and
switching the multiplexing mode according to the decision.

7. The method according to claim 6, further comprising the step of requesting by the base station, in response to switching to multiplexing the IP packets to the multiple dedicated radio bearers, channel quality information from the relay node for at least one of the user equipments to which the IP packets are to be provided by the relay node.

8. The method according to one of claims 1 to 7, wherein the IP packets are further provided from the relay node to user equipments via dedicated radio channels, and the method is further comprising the steps of :
receiving at the base station from the relay node channel quality information,
wherein the channel quality information comprises for each user equipment reported on the respective user equipment's identifier and a channel quality on the radio channel between the relay node and the respective user equipment,
determining at the base station from the IP packets identifiers of the user equipment to which the IP packets are to be provided by the relay node, and
multiplexing the IP packets to the multiple dedicated radio bearers according to their QoS class and the radio channel quality of the respective user equipments on the radio channel between the relay node and the respective user equipment.

9. A method for providing IP packets from a core network node to a relay node, wherein the IP packets are conveyed via a base station to the relay node on a wireless interface, the method comprising the following steps performed by the relay node:
transmitting a trigger to the base station for requesting the base station to switch between multiplexing the IP packets to a single dedicated radio bearer and multiplexing the IP packets to multiple dedicated radio bearers according to their QoS class that is controlling their respective radio bearer level packet forwarding treatment, and
in response to the trigger, receiving from the base station IP packets destined to user equipments connected to the relay node via the single dedicated radio bearer, or via the multiple dedicated radio bearers.

10. The method according to claim 9, wherein the relay node is receiving IP packets destined to user equipments connected to the relay node via the single dedicated radio bearer and the method is further comprising the step of deciding to trigger the provision of the IP packets via the multiple radio bearers by transmitting said message based on at least one of:
- physical channel resources allocated to the relay node by the base station for the provision of the IP packets on the single radio bearer, and
- the number of dedicated radio bearers established by the relay node to attached user equipments optionally further taking into account the QoS classes of the dedicated radio bearers.,

11. The method according to claim 9 or 10, further comprising the steps of:
determining the radio channel quality on a radio channel between the relay node and a respective user equipment,
signalling for a respective user equipment connected to the relay node the determined radio channel quality and an identifier of the user equipment to the base station.

12. A base station for providing IP packets destined to user equipments connected to a relay node, the base station comprising a multiplexer for multiplexing the IP packets and a control unit for controlling the multiplexer, wherein the control unit is adapted to switch the multiplexer between the modes of
- multiplexing the IP packets to one dedicated radio bearer and
- multiplexing the IP packets to multiple dedicated radio bearers
for provision to the relay node,
wherein the multiplexer is adapted to multiplex the IP packets according to their QoS class that is controlling their respective radio bearer level packet forwarding treatment, when the multiplexer is in the mode of multiplexing the IP packets to the multiple dedicated radio bearers.

13. A relay node receiving IP packets from a relay node, wherein the IP packets are conveyed from a core network node via a base station to the relay node on a wireless interface, the relay node comprising:
a transmitter for transmitting a trigger to the base station for requesting the base station to switch between multiplexing the IP packets to a single dedicated radio bearer and multiplexing the IP packets to multiple dedicated radio bearers according to their QoS class that is controlling their respective radio bearer level packet forwarding treatment, and
a receiver for receiving in response to the trigger IP packets from the base station, wherein the IP packets are destined to user equipments connected to the relay node via the single dedicated radio bearer, or via the multiple dedicated radio bearers.

14. A computer readable medium storing instructions that, when executed by a processor of a base station, cause the base station to provide IP packets destined to user equipments connected to a relay node, by:
switching between
- multiplexing the IP packets to one dedicated radio bearer and
- multiplexing the IP packets to multiple dedicated radio bearers
for provision to the relay node, wherein when multiplexing the IP packets to the multiple dedicated radio bearers the IP packets are multiplexed according to their QoS class that is controlling their respective radio bearer level packet forwarding treatment.

15. A computer readable medium storing instructions that, when executed by a processor if a relay node, cause the relay node to receive IP packets from a relay node, by:
transmitting a trigger to the base station for requesting the base station to switch between multiplexing the IP packets to a single dedicated radio bearer and multiplexing the IP packets to multiple dedicated radio bearers according to their QoS class that is controlling their respective radio bearer level packet forwarding treatment, and
receiving in response to the trigger IP packets from the base station, wherein the IP packets are destined to user equipments connected to the relay node via the single dedicated radio bearer, or via the multiple dedicated radio bearers.
